# EUROPEAN PATENT APPLICATION

(11) **EP 4 410 868 A1**
(43) Date of publication of application: **07.08.2024**
(21) Application number: 22876957.6
(22) Date of filing: 30.09.2022
(51) Int. Cl.: C08G 73/10, C08L 79/08, C08J 3/12

(54) **POLYIMIDE POWDER AND PREPARATION METHOD THEREFOR**

(30) Priority: 30.09.2021 KR 20210130022; 02.11.2021 KR 20210148544
(71) Applicant: PI Advanced Materials Co., Ltd., Chungcheongbuk-do 27818 (KR)
(72) Inventor: YANG, Min Seok, Jincheon-gun Chungcheongbuk-do 27818 (KR); LEE, Ho Sung, Jincheon-gun Chungcheongbuk-do 27818 (KR); LEE, Ik Sang, Jincheon-gun Chungcheongbuk-do 27818 (KR)
(74) Representative: Eisenführ Speiser
(86) International application number: PCT/KR2022/014793
(87) International publication number: WO 2023/055186

(57) **Abstract**

The present invention relates to a polyimide powder and a preparation method therefor. With respect to the polyimide powder and the preparation method therefor, according to the present invention, a preparation process is simplified such that process efficiency can be improved, a polyimide is prepared in the form of a powder so as to facilitate molding thereof, and the polyimide has a low precipitation temperature and a high intrinsic viscosity so as to facilitate processing thereof, and has a uniform particle size so as to have excellent processability.

## Description

### [Technical Field]

The present invention relates to a polyimide powder and a preparation method thereof.

### [Background Art]

In general, polyimide (PI) is a polymer of imide monomers, which is formed by solution polymerization of a dianhydride and a diamine or diisocyanate, and has excellent mechanical properties such as strength, chemical resistance, weather resistance and heat resistance based on the chemical stability of the imide ring. In addition, polyimide is attracting attention as a high-performance polymer material applicable in a wide range of industrial fields such as electronic, communication and optics due to having excellent electrical properties such as insulation and low permittivity.

However, it is difficult to manufacture molded articles from polyimide by a heat melting method used for typical polymer resins due to the high heat resistance and chemical resistance of polyimide. Accordingly, a method of reacting a dianhydride and a diamine in a solvent to synthesize polyamic acid which is a precursor and then imidizing the polyamic acid after dispersion or application according to the purpose of use has been used. However, this method has a problem in that the process is complicated by performing two steps of preparing polyamic acid and imidizing the polyamic acid, a high temperature of 300 °C or higher is required in the imidization step, and it is difficult to obtain high-molecular-weight polyimide.

As a method for solving the above problem, a synthesis method, in which polyamic acid, which is a precursor, reacts in the presence of a solvent and is heated to precipitate a polyimide powder, is known. However, this method has a problem in that the precipitation temperature of a polyimide powder is still high, a polyimide powder prepared by this method has a low intrinsic viscosity, defects frequently occur during molding due to a non-uniform particle size, and processability decreases.

### [Disclosure]

### [Technical Problem]

The present invention is designed to solve the technical problems of the related art and directed to providing a polyimide powder and a method of preparing the polyimide powder, which is easy to mold by preparing a polyimide in the form of powder, has a low polyimide precipitation temperature, is easy to process due to having a high intrinsic viscosity, and has excellent processability due to a uniform particle size.

### [Technical Solution]

One aspect of the present invention provides a method of preparing a polyimide powder. In the method of preparing a polyimide powder, a dianhydride monomer component, a diamine monomer component and a catalyst are reacted in a solvent and then heated to precipitate a polyimide powder.

Specifically, the method of preparing a polyimide powder according to the present invention includes: a polymerization step of dissolving a dianhydride monomer component and a diamine monomer component in a solvent and allowing the solution to react; and an imidization step of adding a catalyst to the reaction solution produced in the polymerization step and performing imidization to precipitate a polyimide powder.

The dianhydride monomer is not particularly limited as long as it reacts with a diamine monomer to form a polyimide. For example, the dianhydride monomer according to the present invention may include at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA) and p-phenylenebis(trimellitate anhydride) (TAHQ).

The dianhydride monomer may be, for example, PMDA, ODPA or a mixture thereof. In this case, a molar ratio of PMDA and ODPA in the dianhydride monomer may be 9:1 to 1:9, for example, 9:1 to 7:3. The dianhydride monomer may be appropriately selected and used in consideration of heat resistance and flexibility. Also, when PMDA composed of rigid aromatic rings is mixed with a dianhydride monomer including heteroatoms, for example, ODPA, the precipitation temperature of a polyimide powder may decrease, and the color may become brighter.

The diamine monomer is not particularly limited as long as it reacts with a dianhydride monomer to form polyamic acid. For example, the diamine monomer according to the present invention may include at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP) and 2,2-bisaminophenoxyphenylhexafluoropropane (HFBAPP).

The diamine monomer delocalizes the aromatic electron distribution by including heteroatoms therein, and accordingly, brightness may be improved. For example, the diamine monomer may be ODA.

The catalyst is a tertiary amine. Generally, in the method of preparing a polyimide via polyamic acid, an amine is used to imidize polyamic acid. Specifically, the amine catalyst may promote a dehydration reaction to produce a polyimide through a ring-closing reaction of polyamic acid. However, a method using a tertiary amine in a process of preparing a polyimide powder has not been reported, and the present inventors have found that, when a tertiary amine is used in a method of preparing a polyimide powder, the precipitation temperature of a polyimide powder may decrease. Also, a polyimide powder prepared using the catalyst is easy to process during molding by having a high intrinsic viscosity and significantly decreased cracks, and thus yield may be improved.

Specifically, the catalyst may be pyridine, beta-picoline, 1,4-diazabicyclo[2.2.2]octane (DABCO), triethylamine (TEA), isoquinoline or a mixture thereof. Particularly, when the tertiary amine includes an unshared electron pair, an effect of decreasing the precipitation temperature of a polyimide powder or increasing intrinsic viscosity may be remarkably excellent. For example, the catalyst may be pyridine, beta-picoline or isoquinoline.

The catalyst may be included in an amount of 0.1 to 500 parts by mole based on 100 parts by mole of the diamine monomer component. For example, the catalyst may be included in an amount of 0.1 parts by mole or more, 0.5 parts by mole or more, 1 part by mole or more, 5 parts by mole or more, 10 parts by mole or more, 50 parts by mole or more or 100 parts by mole or more with respect to the diamine monomer. Although not particularly limited, the upper limit may be 400 parts by mole or less, 300 parts by mole or less or 200 parts by mole or less. When the catalyst content is below the above range, it is difficult to expect the effect of decreasing the precipitation temperature of a polyimide powder and increasing intrinsic viscosity, and when the catalyst content exceeds the above range, the effect resulting from the catalyst is insignificant, and costs increase. When the above range is satisfied, an increase in intrinsic viscosity and a decrease in polyimide precipitation temperature can be realized without degrading the physical properties of the polyimide powder.

As the solvent, benzene, toluene, xylene, acetone, hexane, heptane, chlorobenzene, methanol, ethanol, n-propanol, isopropanol, N-methyl-2-pyrrolidone (NMP), N,N-dimethylacetamide, N,N-diethylacetamide, N,N-dimethylformamide, N,N-diethylformamide, N-methylcaprolactam, hexamethylphosphoramide, tetramethylene sulfone, dimethyl sulfoxide, o-cresol, m-cresol, p-cresol, phenol, p-chlorophenol, 2-chloro-4-hydroxytoluene, diglyme, triglyme, tetraglyme, dioxane, γ-butyrolactone, dioxolane, cyclohexanone, cyclopentanone, dichloromethane, chloroform, 1,2-dichloroethane, 1,1,2-trichloroethane, dibromomethane, tribromomethane, 1,2-dibromoethane or 1,1,2-tribromoethane may be used alone or in combination.

As the solvent, a solvent including at least one nitrogen atom is preferred in consideration of compatibility with the catalyst and decreasing a polyimide precipitation temperature. For example, as a solvent suitable in the present invention, NMP, xylene or m-cresol may be used alone or in combination.

In addition, the solvent according to the present invention may be a composite solvent including a first solvent including at least one nitrogen atom and a second solvent having at least one hydroxyl group (-OH). For example, the first solvent may be NMP, and the second solvent may be m-cresol.

In this case, a weight ratio of the first solvent and the second solvent may be 5:5 to 9:1, for example, 6:4 to 9:1, 7:3 to 9:1, 7:3 to 8:2, 3:7 to 10:0, 4:6 to 9:1 or 5:5 to 8:2. When a proportion of the first solvent exceeds the above range, the precipitation temperature of a polyimide powder increases, and when a proportion of the first solvent is below the above range, polymerization proceeds similarly to suspension polymerization, and thus it is not easy to obtain powder, and the color of the prepared powder may become dark.

Since the composite solvent is used in the present invention, a dianhydride monomer and a diamine monomer may be uniformly dissolved, and accordingly, uniform particles may be formed due to less agglomeration of the precipitated polyimide powder.

In the case of the composite solvent according to the present invention, the boiling point of the first solvent and the boiling point of the second solvent may differ by 10 °C or lower, for example, 5 °C or lower, 4 °C or lower, 3 °C or lower, 2 °C or lower or 1 °C or lower.

By minimizing the boiling point difference between the solvents as described above, the precipitation temperature of a polyimide powder when heating the polymerization product may be lowered, and the intrinsic viscosity of the prepared polyimide powder may be increased.

In the polymerization step, both a dianhydride monomer component and a diamine monomer component may be dispersed or dissolved in a solvent, or after a solution in which a dianhydride monomer component is dispersed in a solvent and a solution in which a diamine monomer component is dispersed in a solvent are separately prepared, a catalyst may be added to the polymerization product in which the two solutions are mixed. Alternatively, after one of the dianhydride monomer component and diamine monomer component is dissolved in a solvent, the other may be dissolved therein.

In an embodiment, the polymerization step may include: heating a solvent; dissolving a diamine monomer component in the heated solvent; and reacting the solution having the diamine dissolved therein with a dianhydride monomer component.

The heating of a solvent may be performed at 50 to 100 °C, for example, 60 to 90 °C or 60 to 80 °C. The dissolution of a diamine monomer component in the heated solvent may be performed at 50 to 100 °C for 1 to 60 minutes. In this case, the temperature may be, for example, 60 to 90 °C or 60 to 80 °C, and the time may be 1 to 30 minutes.

In addition, the reaction of the solution having a diamine dissolved therein with a dianhydride monomer component may be performed at 50 to 100 °C for 1 to 6 hours. In the reaction of the solution having a diamine dissolved therein with a dianhydride monomer component, the dianhydride monomer component may be added at a rate of 0.01 mol/s to 10 mol/s, for example, 0.05 mol/s to 10 mol/s, 0.1 mol/s to 10 mol/s, 1 mol/s to 10 mol/s, 1 mol/s to 5 mol/s or 1 mol/s to 3 mol/s.

As the polymerization product is prepared by the above method, side reactions may be suppressed to increase the yield of a product, and the amount of residual dianhydride or diamine may be reduced to brighten the color of a polyimide powder.

In addition, as the dianhydride is added at the above rate, side reactions may be suppressed to increase the yield of a product, and the amount of residual dianhydride or diamine may be reduced to brighten the color of a polyimide powder.

In the polymerization step, the dianhydride monomer and the diamine monomer may be included in an amount of 1 to 30 wt%, for example, 1 to 20 wt%, 1 to 15 wt%, 3 to 15 wt%, 5 to 15 wt% or 5 to 10 wt% based on the total weight of the solution. When the solid content is exceeds the above range, it is difficult to perform stirring, the yield may decrease, or quality may be degraded. On the other hand, when the solid content is below the above range, preparation costs may increase.

The polymerization step is a step of polymerizing a dianhydride monomer and a diamine monomer through heating. In the polymerization step, a heating temperature may be 30 to 100 °C, for example, 40 to 100 °C, 50 to 90 °C or 60 to 80 °C.

When the heating temperature is below the above range, the reaction may slowly proceed, and the yield of polyimide powder may decrease. On the other hand, when the heating temperature exceeds the above range, the particle size may increase.

In the polymerization step, a reaction time may be 1 to 10 hours, for example, 1 to 8 hours, 1 to 6 hours, 1 to 4 hours or 1 to 3 hours.

When the reaction time is below the above range, the reaction yield may decrease, and the mechanical properties of powder, such as an elongation rate and tensile strength, may be degraded. On the other hand, when the reaction time exceeds the above range, the color of powder may become dark, and the particle size may increase.

The imidization step is a step of imidizing the polymerization product through heating and pressurization. In the imidization step, a heating temperature may be 150 to 300 °C, for example, 160 to 200 °C, 170 to 200 °C or 180 to 200 °C.

When the heating temperature is below the above range, the reaction may slowly proceed, and the yield of polyimide powder may decrease. On the other hand, when the heating temperature exceeds the above range, particle size may increase.

In the imidization step, a reaction time may be 1 to 10 hours, for example, 1 to 8 hours, 1 to 6 hours, 1 to 4 hours or 1 to 3 hours.

When the reaction time is below the above range, the reaction yield may decrease, and mechanical properties such as an elongation rate and tensile strength may be degraded. On the other hand, when the reaction time exceeds the above range, the color of powder may become dark, and the particle size may increase.

According to the present invention, a polyimide powder may be precipitated by the imidization step. In this case, the polyimide powder may be precipitated at a precipitation temperature of 100 to 200 °C. For example, the lower limit of the precipitation temperature may be 105 °C or higher, 110 °C or higher, 115 °C or higher, 120 °C or higher, 125 °C or higher or 130 °C or higher, and the upper limit of the precipitation temperature may be 195 °C or lower, 190 °C or lower, 185 °C or lower, 180 °C or lower, 175 °C or lower, 170 °C or lower, 165 °C or lower, 160 °C or lower, 155 °C or lower, 150 °C or lower, 145 °C or lower, 140 °C or lower or 135 °C or lower. The precipitation temperature is affected by the dianhydride monomer and diamine monomer composition, the type and content of catalyst and a solvent.

The method of preparing a polyimide powder according to the present invention may further include filtering and drying the precipitated polyimide powder after the imidization step. Although the filtration and drying methods are not particularly limited, the drying method may be, for example, vacuum drying or drying in a high-temperature oven. Specifically, the drying may be drying in an oven set to 100 °C or higher for 24 hours or more.

Another aspect of the present invention provides a polyimide powder prepared by the above-described method of preparing a polyimide powder.

As prepared by the above-described method, the polyimide powder has an advantage of being easy to process due to having a high intrinsic viscosity and having excellent processability due to a uniform particle size.

For example, the polyimide powder may have an intrinsic viscosity of 0.9 dl/g or more, 0.95 dl/g or more, 1.0 dl/g or more, 1.05 dl/g or more, 1.1 dl/g or more, 1.15 dl/g or more, 1.2 dl/g or more, 1.25 dl/g or more, 1.3 dl/g or more, 1.35 dl/g or more, 1.4 dl/g or more, 1.45 dl/g or more, 1.5 dl/g or more, 1.55 dl/g or more, 1.6 dl/g or more, 1.65 dl/g or more, 1.7 dl/g or more or 1.75 dl/g or more. The intrinsic viscosity may be measured at 30 °C using an Ubbelohde viscometer after 50 mg of the polyimide powder is input into a vial and dissolved in 10 g of concentrated sulfuric acid.

The polyimide powder according to the present invention may have a D₅₀ of 150 µm or less. For example, the upper limit of the D₅₀ of the polyimide powder according to the present invention may be 120 µm or less, 110 µm or less, 105 µm or less, 100 µm or less, 95 µm or less, 90 µm or less, 80 µm or less or 60 µm or less, and the lower limit of the D₅₀ may be 10 µm or more, 20 µm or more, 25 µm or more or 30 µm or more.

The polyimide powder according to the present invention may have a D_{99.9} of 500 µm or less. For example, the upper limit of the D_{99.9} of the polyimide powder according to the present invention may be 300 µm or less, 250 µm or less, 210 µm or less or 200 µm or less, and the lower limit of the D_{99.9} may be 10 µm or more, 50 µm or more or 100 µm or more.

Here, "Dₙ" refers to the particle size when the cumulative percentage in the particle size distribution reaches n vol%. Therefore, "D_{99.9}" refers to the particle size when the cumulative percentage in the particle size distribution reaches 99.9 vol%, and "D₅₀" refers to the particle size when the cumulative percentage in the particle size distribution reaches 50 vol%. The particle size distribution refers to the particle diameter distribution graph of a polyimide powder analyzed using a laser particle size analyzer and may be specifically measured using a laser diffraction light-scattering particle size analyzer (e.g., Malvern Mastersizer 3000).

When the D₅₀ and D are satisfied, it can be easy to set appropriate molding conditions when molding a polyimide powder, and cracking or breakage can be effectively prevented during molding, thereby resulting in excellent processability.

In addition, the polyimide powder according to the present invention may have a D_{99.9}/D₅₀ of 15 or less. For example, the upper limit of the D_{99.9}/D₅₀ of the polyimide powder according to the present invention may be 14 or less, 13 or less, 12 or less or 11 or less, and lower limit of the D_{99.9}/D₅₀ may be 5 or more, 7 or more or 10 or more.

Since the polyimide powder according to the present invention has a small particle size variation as described above, uniform powder may be provided, and accordingly, a defect rate may be reduced during powder molding to increase yield.

Still another aspect of the present invention provides a molded article including the above-described polyimide powder. The polyimide powder prepared according to the present invention may be processed by various molding methods to manufacture a molded article, and required molded articles may be manufactured, for example, using compression molding, injection molding, slush molding, blow molding, extrusion molding or spinning. The molded article may be a plate, a bar, a film, a sheet, a pellet, a belt or a tube.

The polyimide powder prepared according to the present invention may be used in various fields such as the electrical/electronic, semiconductor, display, automotive, medical, battery and aerospace fields.

### [Advantageous Effects]

According to the polyimide powder and preparation method thereof according to the present invention, a preparation process can be simplified to increase process efficiency, molding is easy by preparing a polyimide in the form of powder, a polyimide precipitation temperature is low, processing is easy due to high intrinsic viscosity, and processability is excellent due to a uniform particle size.

### [Modes of the Invention]

Hereinafter, the present invention will be described in further detail with reference to examples according to the present invention and comparative examples not according to the present invention, and the scope of the present invention is not limited to the following examples.

### <Preparation of polyamic acid solution>

### Example 1

A Dean-Stark trap was installed in a 1000 ml reactor equipped with a stirrer and nitrogen inlet/outlet tubes, a solvent in which N-methyl-2-pyrrolidone (NMP) and m-cresol were mixed in a weight ratio of 5:5 was heated to 70 °C while nitrogen was injected, and 4,4'-diaminodiphenyl ether (ODA) was completely dissolved in the heated solvent. Afterward, pyromellitic dianhydride (PMDA) was completely dissolved in the resulting solvent and then allowed to react at 75 °C for 2 hours. With respect to 100 parts by mole of ODA, 200 parts by mole of pyridine (PR) was added as a catalyst to the resulting reaction solution, heated to 200 °C while stirring, and further heated for another 2 hours to precipitate a polyimide powder.

For reference, the boiling point of NMP is 202 °C, and the boiling point of m-cresol is 202.2 °C.

### Examples 2 to 14

Polyimide powders were prepared in the same manner as in Example 1, except that monomer components, a solvent and a catalyst were adjusted as shown in Table 1 below.

### Comparative Examples 1 to 3

Polyimide powders were prepared in the same manner as in Example 1, except that monomer components, a solvent and a catalyst were adjusted as shown in Table 1 below.

**[Table 1]**

| Classification | Dianhydride | | | Diamine | Solvent (weight ratio) | Catalyst | |
|---|---|---|---|---|---|---|---|
| | Type 1 | Type 2 | Type 3 | | | Type | Content (parts by mole) |
| Example 1 | PMDA | - | - | ODA | NMP/m-cresol (5:5) | Pyridine | 200 |
| Example 2 | PMDA | - | - | ODA | NMP/m-cresol (5:5) | Beta-picoline | 200 |
| Example 3 | PMDA | - | - | ODA | NMP/m-cresol (8:2) | Beta-picoline | 200 |
| Example 4 | PMDA | - | - | ODA | NMP/m-cresol (5:5) | DABCO | 200 |
| Example 5 | PMDA | - | - | ODA | NMP/m-cresol (5:5) | Triethylamine | 200 |
| Example 6 | PMDA | - | - | ODA | NMP/m-cresol (5:5) | Isoquinoline | 200 |
| Example 7 | PMDA | ODPA | 8:2 | ODA | NMP | Pyridine | 200 |
| Example 8 | PMDA | ODPA | 8:2 | ODA | NMP | Beta-picoline | 200 |
| Example 9 | PMDA | - | - | ODA | NMP | Beta-picoline | 200 |
| Example 10 | PMDA | - | - | ODA | NMP/m-cresol (5:5) | Beta-picoline | 0.1 |
| Example 11 | PMDA | - | - | ODA | NMP/m-cresol (5:5) | Beta-picoline | 0.5 |
| Example 12 | PMDA | - | - | ODA | NMP/m-cresol (5:5) | Beta-picoline | 10 |
| Example 13 | PMDA | - | - | ODA | NMP/m-cresol (5:5) | Beta-picoline | 50 |
| Example 14 | PMDA | - | - | ODA | NMP/m-cresol (5:5) | Beta-picoline | 400 |
| Comparative Example 1 | PMDA | - | - | ODA | NMP/m-cresol (5:5) | - | - |
| Comparative Example 2 | PMDA | ODPA | 8:2 | ODA | NMP/m-cresol (5:5) | - | - |
| Comparative Example 3 | PMDA | - | - | ODA | NMP | - | - |

### Experimental Examples

The physical properties of the prepared polymerization product and polyimide powder were measured by the following methods, and results thereof are shown in Table 2 below.

### Experimental Example 1 - Intrinsic viscosity

Measurement was made at 30 °C using an Ubbelohde viscometer. Specifically, measurement was made using an Ubbelohde viscometer after 50 mg of the polyimide powder was input into a vial and dissolved in 10 g of concentrated sulfuric acid.

### Experimental Example 2 - Precipitation temperature

The temperature when the clear solution after polymerization became cloudy due to imidization was measured.

### Experimental Example 3 - Particle size distribution of polyimide powder

The particle size distribution (D₅₀) of the prepared polyimide powder was measured using a laser diffraction light-scattering particle size analyzer (e.g., Malvern Mastersizer 3000).

**[Table 2]**

| Classification | Intrinsic viscosity (dl/g) | Precipitation temperature (°C) | Particle size, D₅₀ (µm) |
|---|---|---|---|
| Example 1 | 1.79 | 115 | 35 |
| Example 2 | 1.70 | 105 | 56 |
| Example 3 | 1.54 | 120 | 41 |
| Example 4 | 1.3 | 130 | 56 |
| Example 5 | 1.32 | 131 | 87 |
| Example 6 | 1.44 | 124 | 102 |
| Example 7 | 0.98 | 173 | 32 |
| Example 8 | 0.93 | 170 | 34 |
| Example 9 | 0.90 | 175 | 40 |
| Example 10 | 1.41 | 135 | 27 |
| Example 11 | 1.39 | 132 | 31 |
| Example 12 | 1.55 | 120 | 40 |
| Example 13 | 1.77 | 115 | 56 |
| Example 14 | 1.69 | 105 | 70 |
| Comparative Example 1 | 1.04 | 137 | 29 |
| Comparative Example 2 | 0.79 | 182 | 21 |
| Comparative Example 3 | 0.84 | 180 | 30 |

## Claims

1. A method of preparing a polyimide powder, comprising:
a polymerization step of reacting a dianhydride monomer component and a diamine monomer component in a solvent; and
an imidization step of adding a catalyst to the reaction solution produced in the polymerization step and performing imidization to precipitate a polyimide powder.

2. The method of claim 1, wherein the catalyst is a tertiary amine.

3. The method of claim 1, wherein the catalyst is included in an amount of 0.1 to 500 parts by mole based on 100 parts by mole of the diamine monomer component.

4. The method of claim 1, wherein the polymerization step includes:
heating a solvent;
dissolving a diamine monomer component in the heated solvent; and
reacting the solution having the diamine dissolved therein with a dianhydride monomer component.

5. The method of claim 4, wherein the heating of a solvent is performed at 50 to 100 °C.

6. The method of claim 4, wherein the dissolution of a diamine monomer component in the heated solvent is performed at 50 to 100 °C for 1 to 60 minutes.

7. The method of claim 4, wherein the reaction of the solution having a diamine dissolved therein with a dianhydride monomer component is performed at 50 to 100 °C for 1 to 6 hours.

8. The method of claim 4, wherein, in the reaction of the solution having a diamine dissolved therein with a dianhydride monomer component, the dianhydride monomer component is added at a rate of 0.01 mol/s to 10 mol/s.

9. The method of claim 1, wherein the solvent is a composite solvent including a first solvent including at least one nitrogen element and a second solvent having at least one hydroxyl group (-OH), and
wherein the boiling point of the first solvent and the boiling point of the second solvent differ by 10 °C or lower.

10. The method of claim 1, wherein the imidization step is performed at 150 to 300 °C for 1 to 10 hours.

11. The method of claim 1, wherein the dianhydride monomer includes at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA) and p-phenylenebis(trimellitate anhydride) (TAHQ).

12. The method of claim 1, wherein the diamine monomer includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis(4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP) and 2,2-bisaminophenoxyphenylhexafluoropropane (HFBAPP).

13. A polyimide powder prepared by the method of claim 1.

14. The polyimide molded article of claim 13, wherein the polyimide powder has an intrinsic viscosity of 0.9 dl/g or more.

15. The polyimide powder of claim 13, wherein the polyimide powder has a D₅₀ of 150 µm or less.

16. A polyimide molded article comprising the polyimide powder of claim 13.
